# EUROPÄISCHE PATENTSCHRIFT

(11) **EP 1 580 082 B1**
(45) Veröffentlichungstag und Bekanntmachung des Hinweises auf die Patenterteilung: **29.10.2008**
(21) Anmeldenummer: 05006054.0
(22) Anmeldetag: 19.03.2005
(51) Int. Cl.: B60R 21/13

(54) **Schwenkbarer Überrollbügel**
Pivotable rollover bar
Arceau de sécurité pivotable

(30) Priorität: 24.03.2004 DE 102004014475
(43) Veröffentlichungstag der Anmeldung: 28.09.2005
(73) Patentinhaber: BOMAG GmbH, 56154 Boppard (DE)
(72) Erfinder: Kürten, Hans-Werner, 56290 Gödenroth (DE); Mötz, Karl-Hermann, 56283 Nörtershausen (DE)
(74) Vertreter: Lang, Friedrich

(56) Entgegenhaltungen:
- DE-A1- 2 543 077
- GB-A- 2 175 259
- US-A- 3 563 401
- US-A- 4 949 991
- US-A- 5 503 430

## Beschreibung

Die Erfindung betrifft einen schwenkbaren Überrollbügel für Fahrzeuge, insbesondere für Baufahrzeuge, mit zwei Vertikalträgern, die jeweils ein Paar, über eine Gelenkverbindung schwenkbar miteinander verbundene, Holme aufweisen. Weiterhin weist die Gelenkverbindung sowohl eine Arretierung als auch einen, den Schwenkraum des Überrollbügels begrenzenden, Anschlag auf.

Dokument DE 25 43 077 A1 offenbart einen abklappbaren Sicherheitsbügel für Zugfahrzeuge, insbesondere für Ackerschlepper. Hierbei besteht der Sicherheitsbügel aus zwei im Wesentlichen senkrechten, am Fahrzeug befestigten Stützen, die für das Umlegen des Sicherheitsbügels jeweils ein gegenüber ein Stützenunterteil abklappbares Stützenoberteil aufweisen und die an den freien Enden des Stützenoberteiles mit einem Verbindungsholm miteinander verbunden sind. Die Stützenoberteile sind um das jeweilige Gelenk schwenkbar, wobei im Betrieb eine Klemmeinrichtung in Form eines Klemmhebels die Stützenoberteile arretiert.

Arbeitsfahrzeuge, insbesondere Baufahrzeuge, sind häufig mit Überschlagschutzeinrichtungen bzw. Überrollbügeln ausgestattet, die am Fahrzeugrahmen befestigt sind und sich nach oben erstrecken, um eine Bedienungsperson im Falle eines Überschlages des Fahrzeuges zu schützen. Ist das Arbeitsfahrzeug mit einer Fahrerkabine ausgestattet, wird der Überrollbügel normalerweise in die Fahrerkabine integriert. Wird das Arbeitsfahrzeug hingegen ohne Fahrerkabine ausgeführt, wird der Überrollbügel normalerweise alleinstehend ausgebildet, wobei der Überrollbügel im Allgemeinen als U-förmiger Bügel ausgeführt wird, dessen freie Enden am Fahrzeugrahmen befestigt werden und dessen Querträger im Wesentlichen über dem Kopf der Bedienungsperson angeordnet ist. Dadurch ist der Überrollbügel häufig der Teil des Fahrzeuges, der sich am weitesten nach oben erstreckt.

Solch ein nach oben rauskragender Überrollbügel kann zum Beispiel beim Transport des Fahrzeuges oder während des Arbeitsbetriebes des Fahrzeuges nachteilig sein.

Um dieses Problem zu überwinden, sind Überrollbügel ausgestattet mit Klappmechanismen bekannt, die es erlauben einen oberen Bereich des Überrollbügels abzuschwenken und somit die Höhe des Arbeitsfahrzeuges zu reduzieren. Diese Klappmechanismen weisen im Allgemeinen Arretierungen auf, wodurch das obere Segment des Überrollbügels im hochgeschwenkten Zustand gegen das untere ortsfeste Segment des Überrollbügels arretiert werden kann. Bekannt sind schwenkbare Überrollbügel, bei denen das obere schwenkbare Segment mittels zwei Bolzen mit dem unteren, ortsfesten Segment verbunden wird. Dabei dient ein Bolzen als Scharnier, welches ortsfest zwischen den beiden Segmenten angeordnet ist. Der andere Bolzen kann entfernt werden und erlaubt dadurch ein Abschwenken des oberen Segmentes. Der Arretierungsbolzen ist hierbei parallel zur Schwenkachse des Scharniers ausgebildet.

Nachteilig wirkt sich hierbei aus, dass eine solche Arretierung durch Verbolzung spielbehaftet ist und im Falle von betriebsbedingt auftretenden Vibrationen, das obere Segment des Überrollbügels ausschlägt. Des Weiteren ist eine derartige Verbindung aufwendig herzustellen.

Um dieses Problem zu überwinden gibt es Konstruktionen, bei denen das obere Segment des Überrollbügels durch mehrere Schraubverbindungen arretiert wird anstatt durch einen Bolzen. Nachteilig ist hierbei, dass das Entfernen der Schrauben zum Abschwenken des oberen Segmentes des Überrollbügels nur durch Verwendung von Werkzeug möglich ist. Weiterhin werden die Schrauben zum Abschwenken des oberen Segmentes komplett vom Überrollbügel entfernt und können leicht verloren gehen. Auch muss die Schraubverbindung mit einem vorgegebenen Anzugsmoment hergestellt werden und kann somit nur von geschultem Personal ausgeführt werden.

Im Falle des Überschlagens des Arbeitsfahrzeuges treten hohe Kräfte und Momente auf, die auf den Überrollbügel wirken und von den Vertikalträgern aufgenommen werden müssen. Dabei können im Bereich der Gelenkverbindungen zwischen dem oberen und dem unteren Segment des Überrollbügels Verbiegungen, Knicken oder Brüche auftreten, da dieser Bereich im Allgemeinen der Teil des Überrollbügels ist, der am wenigsten Kräfte aufnehmen kann.

Der Erfindung liegt daher die Aufgabe zugrunde, einen schwenkbaren Überrollbügel, insbesondere für Baufahrzeuge, bereitzustellen, welcher einen einfachen Aufbau aufweist, dessen Gelenkverbindung eine hohe Steifigkeit aufweist und somit große Kräfte aufnehmen kann und dessen oberes, schwenkbares Segment gegen das untere, feste Segment spielfrei arretiert werden kann.

Diese Aufgabe wird erfindungsgemäß jeweils entsprechend einem der drei unabhängigen Ansprüchen 1, 2 oder 7 gelöst.

Vorteilhafte Ausgestaltungen der Erfindung sind in den abhängigen Ansprüchen angegeben.

Dadurch, dass die Verlängerung des einen Holmes ein Ende des anderen Holmes teilweise umgreift, entsteht im arretierten Zustand eine biegesteife Verbindung zwischen den beiden Holmen. Dieses verbessert die Fähigkeit der Gelenkverbindung Kräfte aufzunehmen deutlich und somit wird die Wahrscheinlichkeit eines Wegknickens, Verbiegens oder Bruches reduziert.

Da die Gelenkversteifung den anderen Holm umgreift, ist es möglich, die Gelenkversteifung gegen den anderen Holm durch ein Stellglied zu verspannen. Die Verspannung eliminiert das Spiel in der Verbindung des oberen und des unteren Segmentes des Überrollbügels und verhindert somit ein Ausschlagen des oberen Segmentes des Überrollbügels im Falle von Vibrationen. Vorteilhafterweise wird das stufenlos verstellbare Stellglied in die Gelenkverbindung integriert ausgebildet, so dass das Stellglied nach dem Lösen der Arretierung nicht verloren gehen kann.

In der Erfindung wird die Arretierung so angeordnet, dass ihre Wirkungslinie in der Schwenkebene des Holmes liegt. Somit wirkt das Stellglied im Wesentlichen quer und nicht wie bisher bekannt parallel zur Schwenkachse, wodurch eine höhere Spannung beim Arretieren erzeugt werden kann, was die Steifigkeit der Gelenkverbindung erhöht.

Vorteilhafterweise wird die Gelenkversteifung als U-förmige Aufnahme ausgebildet, so dass eine solide Umgreifung des anderen Holmes sichergestellt ist. Bevorzugterweise wird die U-förmige Aufnahme als Rohrsegment ausgeführt, dass auf einer Seite in Längsrichtung offen ist. Weiterhin kann die Gelenkversteifung aus einem separaten Werkstück hergestellt sein, dass an dem einen Holm befestigt ist. Dies hat den Vorteil, dass sowohl Standardholme als auch Standardrohrsegmente verwendet werden können, was die Herstellung und Montage der Vorrichtung weiter vereinfacht.

In einer weiteren Ausführungsform wird die U-förmige Aufnahme ortsfest mit dem einen Holm verbunden. Die Verbindung wird bevorzugter Weise durch Verschweißen hergestellt. Diese ortsfeste Verbindungsweise erhöht die Aufnahmefähigkeit der Gelenkverbindung von Biegemomenten.

Die Gelenkverbindung weist ein Scharnier auf, wobei ein beweglicher Teil des Scharniers von der Gelenkversteifung gebildet wird und ein anderer Teil des Scharniers als Scharnierlager ausgebildet ist, welches am anderen Holm befestigt ist. Durch diese Anordnung ist der eine Holm vom Scharnier und somit auch von der Schwenkachse der Gelenkverbindung beabstandet angeordnet, wodurch das obere Segment des Überrollbügels über den Scheitelpunkt hinweg schwenkbar ist. Durch diese dadurch erzeugte leicht nach vorn geneigte Stellung des oberen Segmentes des Überrollbügels, wird für den Fall des Überrollens der Bereich in dem die Bedienungsperson geschützt ist, vergrößert.

In einer besonders bevorzugten Ausführungsform umgreift die Gelenkversteifung drei Seiten des anderen Holmes vollständig. Diese dreiseitige Umgreifung erhöht weiter die Steifigkeit der Gelenkverbindung. Bevorzugt wird die Gelenkversteifung dabei so angeordnet, dass ihre offene Seite mit der Seite der Gelenkverbindung korrespondiert, die dem Scharnier am nächsten ist.

In einer weiteren Ausführungsform wird das Stellglied als Spannschraube ausgebildet. In der Lösung nach Anspruch 1 weist die Arretierung einen Klemmriegel auf, der zwischen Gelenkversteifung und Schraubenkopf angeordnet wird und der eine Öffnung aufweist, durch die hindurch der Gewindegang der Spannschraube angeordnet wird. Weiterhin weist die Gelenkversteifung im Bereich des Klemmriegels eine Aussparung auf. Die Aussparung ist dabei derart ausgebildet, dass der Klemmriegel von der Spannschraube gegen den Rand der Aussparung gedrückt wird. Wird die Spannschraube gelöst, kann der Klemmriegel durch Drehung in eine Position gebracht werden, in der er mit der Aussparung übereinstimmt, so dass die Gelenkversteifung freigegeben wird. Einerseits kann die aufgebrachte Spannung durch die flächige Auflage des Klemmriegels besser auf die Gelenkversteifung verteilt werden und andererseits bleiben Spannschraube und Klemmriegel im gelösten Zustand fest mit der Gelenkverbindung verbunden, so dass sie nicht verloren gehen können.

Vorteilhafterweise wird die Spannschraube als Knebelschraube ausgebildet, so dass kein Werkzeug zum Verspannen der Gelenkversteifung gegen den anderen Holm benötigt wird.

In einer weiteren vorteilhaften Weiterbildung ist die Arretierung als Exzenterspanner ausgebildet. Diese Ausführungsform weist eine relativ einfache Handhabung auf und erfordert einen geringen Kraftaufwand beim Verspannen der Gelenkversteifung gegen den anderen Holm. Des Weiteren wird der Exzenterspanner am anderen Holm befestigt, so dass diese Arretierungsvorrichtung im gelösten Zustand nicht verloren gehen kann.

In der Lösung nach Anspruch 7 weist die Arretierung einen zweiarmigen Schwenkriegel auf, wobei an einem Arm das Stellglied der Arretierung angeordnet ist. Bevorzugt wird das Stellglied als Spannschraube oder Rastbolzen ausgeführt. Der Schwenkriegel ist dabei so angeordnet, dass der Arm ohne Stellglied, für den Fall dass das obere Segment des Überrollbügels vollständig hochgeschwenkt ist, über die Gelenkversteifung hinweggeschwenkt werden kann. In diesem Zustand befindet sich das Stellglied über dem anderen Holm. Durch die Befestigung des Schwenkriegels am anderen Holm kann dieser also auch im gelösten Zustand nicht verloren gehen.

In einer weiteren bevorzugten Ausführungsform wird die Gelenkverbindung elastisch gelagert ausgebildet. Bevorzugt wird dabei das elastische Lagerelement zwischen der Scharnierachse und dem anderen Holm angeordnet. Beim Hochschwenken des oberen Segmentes des Überrollbügels presst die Gelenkversteifung gegen das Ende des anderen Holmes, wodurch das elastische Lagerelement zusammengedrückt wird und eine Vorspannung entsteht. Diese Vorspannung führt zu einer weiteren Verbesserung der Steifigkeit der Gelenkverbindung.

Bevorzugte Ausführungsformen der Erfindung werden im Folgenden anhand der beigefügten Zeichnungen näher erläutert. Es zeigen schematisch:
- Fig. 1: eine Seitenansicht einer Walze ohne Fahrerkabine mit einem schwenkbaren Überrollbügel sowohl im arretierten als auch im heruntergeschwenkten Zustand;
- Fig. 2: eine Seitenansicht eines schwenkbaren Überrollbügels mit Schwenkbügelarretierung im arretierten Zustand;
- Fig. 3: eine Seitenansicht des schwenkbaren Überrollbügels mit Schwenkbügelarretierung aus Fig. 2 im heruntergeschwenkten Zustand;
- Fig. 4: eine perspektivische Darstellung einer Gelenkverbindung eines schwenkbaren Überrollbügels mit Augenschraube/Klemmriegelarretierung im arretierten Zustand;
- Fig. 5: eine perspektivische Darstellung einer Gelenkverbindung eines Überrollbügels mit Schwenkriegelarretierung im arretierten Zustand;
- Fig. 6: eine Seitenansicht einer Gelenkverbindung eines schwenkbaren Überrollbügels mit einem Exzenterspanner als Arretierung im arretierten Zustand; und
- Fig. 7: einen Querschnitt durch eine Gelenkverbindung eines schwenkbaren Überrollbügels mit elastischer Lagerung und einem Exzenterspanner als Arretierung.

Bei den in den folgenden Figuren dargestellten verschiedenen Ausführungsformen der vorliegenden Erfindung sind gleiche Bestandteile mit gleichen Bezugszeichen versehen.

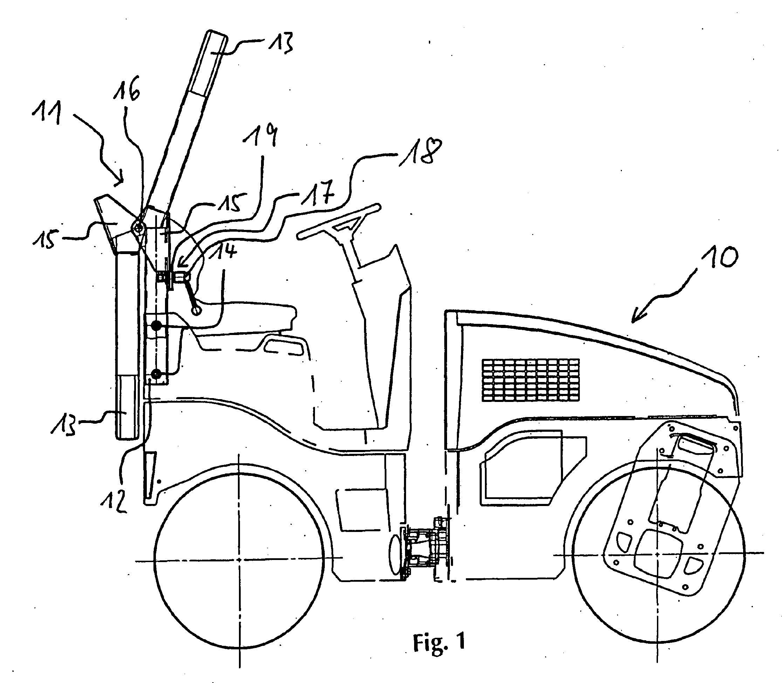

Fig. 1 zeigt die Seitenansicht einer Walze 10 mit einem schwenkbaren Überrollbügel 11, der einen ortsfesten Holm 12 und einen schwenkbaren Holm 13 aufweist. Der Überrollbügel 11 ist sowohl im arretierten als auch im heruntergeschwenkten Zustand dargestellt. Der ortsfeste Holm 12 ist mittels Bolzenverbindungen 14 am Walzenrahmen der Walze 10 befestigt.

Wie Fig. 1 weiter zu entnehmen ist, ist am Ende des schwenkbaren Holms 13 eine Gelenkversteifung 15 angebracht. Die Gelenkversteifung 15 besteht in dem dargestellten Beispiel aus einem U-förmigen Rohrsegment, wobei das U-förmige Rohrsegment 15 so angeordnet ist, dass seine offene Seite mit der Seite des Überrollbügels 11 korrespondiert, an der das Scharnier 16 angebracht ist. Das U-förmige Rohrsegment 15 ist am schwenkbaren Holm 13 angeschweißt und mit dem Scharnier 16 verbunden, so dass das U-förmige Rohrsegment 15 mit samt des angeschweißten, oberen, schwenkbaren Holms 13 um das Scharnier 16 geschwenkt werden kann. Das Scharnier 16 ist am ortsfesten Holm 12 angeschweißt.

Durch die Arretierung 17 wird das U-förmige Rohrsegment 15 im hochgeschwenkten Zustand des schwenkbaren Holmes 13 gegen den ortsfesten Holm 12 verspannt. Die Arretierung 17 ist so angeordnet, dass sie in der Schwenkebene des Überrollbügels 11 wirkt, wodurch die Verspannung des U-förmigen Rohrsegments 15 gegen den ortsfesten Holm 12 vergrößert wird. Im dargestellten Beispiel wird die Arretierung von einer Knebelschraube 18 und einem Klemmriegel 19 gebildet. Die Knebelschraube 18 ermöglicht eine einfache Handhabung beim Arretieren bzw. beim Lösen des schwenkbaren Holmes 13.

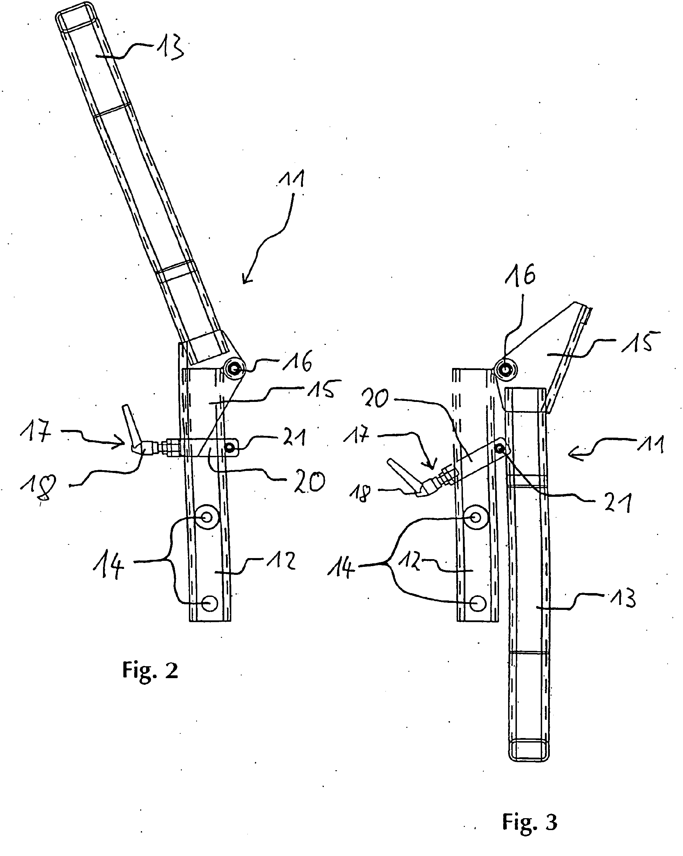

Fig. 2 zeigt die Seitenansicht eines schwenkbaren Überrollbügels 11 im arretierten Zustand. Die Arretierung 17 besteht aus einer Knebelschraube 18, die an einem Schwenkbügel 20 befestigt ist. Der Schwenkbügel 20 ist um ein Bügelscharnier 21 schwenkbar, welches wiederum fest am ortsfesten Holm 12 angebracht ist. Der Schwenkbügel wird dabei so angeordnet, dass er über das untere Ende des U-förmigen Rohrsegments 15 schwenkbar ist. Wird der Schwenkbügel 20 über das untere Ende des U-förmige Rohrsegment 15 geschwenkt, kann dieses durch Anziehen der Knebelschraube 18 gegen den ortsfesten Holm 12 verspannt werden, wodurch der Überrollbügel 11 arretiert wird.

In Fig. 3 ist eine Seitenansicht des Überrollbügels aus Fig. 2 dargestellt, wobei die Arretierung 17 gelöst ist und der schwenkbare Holm 13 herabgeschwenkt ist.

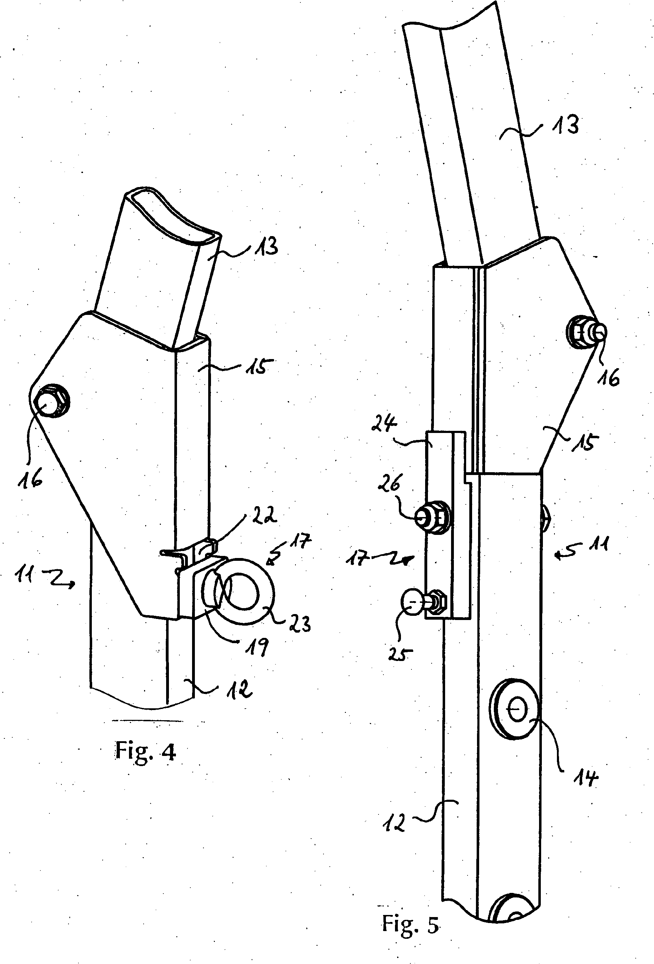

Fig. 4 zeigt eine perspektivische Darstellung eines Ausschnittes eines schwenkbaren Überrollbügels 11 im arretierten Zustand. Gemäß dieser Ausführungsvariante weist die Arretierung 17 einen Klemmriegel 19 und eine als Stellglied eingesetzte Augenschraube 23 auf. Das U-förmige Rohrsegment 15 weist eine Aussparung 22 auf, die sich am unteren Ende des U-förmigen Rohrsegmentes, im Bereich der Arretierung 17 befindet. Sowohl der Klemmriegel 19 als auch die Aussparung 22 weisen rechteckige Formen auf. Ihre Abmaße sind so aufeinander abgestimmt, dass der Klemmriegel in Querstellung Kontakt mit dem U-förmigen Rohrsegment 15 hat und dieses durch Anziehen der Augenschraube 23 gegen den ortsfesten Holm 12 verspannt. Wird die Augenschraube 23 gelöst, kann der Klemmriegel 19 um ca. 90° geschwenkt werden, so dass er in die Aussparung 22 passt und das U-förmige Rohrsegment 15 mit samt des schwenkbaren Holmes 13 freigegeben wird.

Fig. 5 zeigt eine perspektivische Darstellung eines Teilbereichs eines schwenkbaren Überrollbügels 11 im arretierten Zustand. Bei diesem weiteren Ausführungsbeispiel besteht die Arretierung 17 aus einem zweiarmigen Schwenkriegel 24, der an einem Arm eine als Griffspannschraube 25 ausgebildete Spannschraube/Rastbolzen aufweist. Der Schwenkriegel 24 ist über einen, in etwa mittig angeordneten, Bolzen 26 mit dem ortsfesten Holm 12 verbunden. Dabei ist die Bolzenverbindung 26 so ausgebildet, dass der Schwenkriegel 24 um den Bolzen herum drehbar ist. Im arretierten Zustand ist der freie Arm des Schwenkriegels 24 über das untere Ende des U-förmigen Rohrsegmentes 15 gedreht, wodurch der andere Arm, an dem die Griffspannschraube 25 angebracht ist, sich über dem ortsfesten Holm 12 befindet. Durch Anziehen der Griffspannschraube 25 wird der freie Arm des Schwenkriegels 24 gegen das U-förmige Rohrsegment 15 gedrückt, wodurch dieses gegen den ortsfesten Holm 12 verspannt wird.

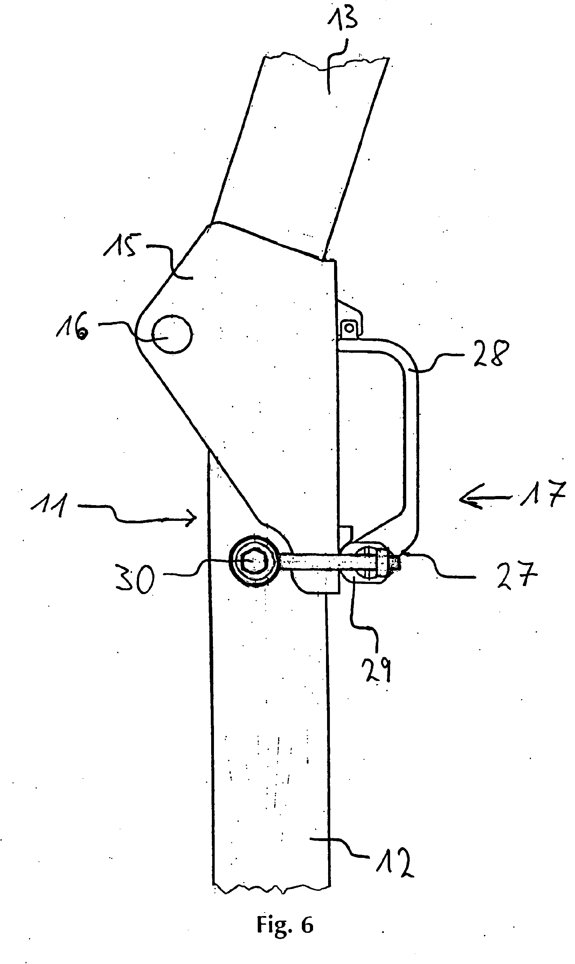

In Fig. 6 ist die Seitenansicht eines Teilausschnittes eines schwenkbaren Überrollbügels 11 im arretierten Zustand dargestellt. Die Arretierung 17 besteht aus einem Exzenterspanner 27, der am ortsfesten Holm 12 angebracht ist. Der Exzenterspanner 27 weist einen Griff 28 auf, der mit einem exzentrischen Spannelement 29 verbunden ist. Des Weiteren ist der Exzenterspanner 27 um ein Schwenkscharnier 30 schwenkbar, über welches er am unteren Holm 12 befestigt ist. Im arretierten Zustand ist der Exzenterspanner 27 über den unteren Teil des U-förmigen Rohrsegmentes 15 geschwenkt und der Griff 28 wird hochgeklappt, bis er an das U-förmige Rohrsegment 15 anschlägt. Durch das Hochklappen des Griffes 28 wird das exzentrische Spannelement 29 gegen den unteren Teil des U-förmigen Rohrsegmentes 15 gedrückt, wodurch dieses gegen den unteren Holm 12 verspannt wird. Zum Lösen der Arretierung wird der Griff 28 heruntergeklappt, wodurch das exzentrische Spannelement 29 gelöst wird, der Exzenterspanner 27 herunterschwenkt und das U-förmige Rohrsegment 15 samt schwenkbarem Holm 13 freigegeben wird.

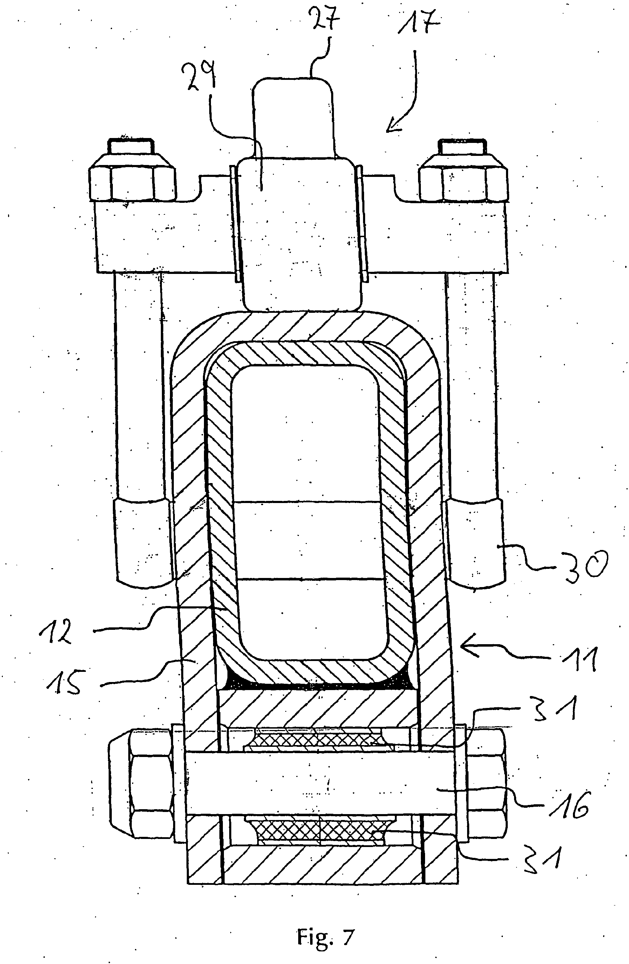

Fig. 7 zeigt den Querschnitt eines schwenkbaren Überrollbügels 11 im Bereich der Gelenkverbindung im arretierten Zustand. Die Arretierung 17 ist als Exzenterspanner 27 ausgebildet. Die in Fig. 7 dargestellte Ausführungsform der Erfindung weist einen aus elastischem Material hergestellten Puffer 31 auf, der zwischen dem Scharnier 16 und dem ortsfesten Holm 12 angeordnet ist. In dem in Fig. 7 gezeigten Beispiel ist der aus elastischem Material hergestellte Puffer 31 als elastische Manschette ausgeführt, die über das Scharnier 16 gestülpt wird. Beim Hochschwenken des schwenkbaren Holmes 13 (hier nicht dargestellt) wird das U-förmige Rohrsegment 15 gegen den ortsfesten Holm 12 gedrückt. Kurz vor dem vollständigem Anliegen der Flächen des U-förmigen Rohrsegmentes 15 und des ortsfesten Holmes 12 kommt es zu einer Keilwirkung, wodurch der Puffer 31 zusammengedrückt wird und das Scharnier 16 vorspannt.

## Patentansprüche

1. Schwenkbarer Überrollbügel (11) mit zwei Vertikalträgern, die jeweils ein Paar Holme aufweisen, wobei jeweils der eine Holm (13) über eine Gelenkverbindung mit dem anderen Holm (12) schwenkbar verbunden ist in der Weise, dass die Gelenkverbindung ein Scharnier (16) aufweist, wobei ein beweglicher Teil des Scharniers (16) die Gelenkversteifung (15) an dem einen Holm (13) ist und ein anderer Teil des Scharniers (16) ein Scharnierlager ist, welches am anderen Holm (12) befestigt ist, und die Gelenkverbindung ferner eine.Arretierung (17) und einen Anschlag aufweist, wobei der Anschlag aus einer Gelenkversteifung (15) besteht, die aus einer Verlängerung des einen Holmes (13) besteht und ein Ende des anderen Holmes (12) teilweise umgreift; und das die Arretierung (17) ein stufenlos verstellbares Stellglied aufweist, mit welchem die Gelenkversteifung (15) gegen den anderen Holm (12) verspannbar ist,
**dadurch gekennzeichnet,**
**dass** die Arretierung (17) einen Klemmriegel (19) aufweist, der über das Stellglied mit dem anderen Holm (12) verbunden ist, dass die Gelenkversteifung (15) eine Aussparung (22) aufweist, die derart ausgebildet ist, dass der Klemmriegel (19) im Falle des Verriegelns über die Fläche der Gelenkversteifung (15) der Aussparung (22) geschwenkt werden kann und die Gelenkversteifung (15) mittels Stellglied spielfrei mit dem anderen Holm (12) verbindet und im Falle des Entriegelns durch Drehung in eine Position gebracht werden kann, in der der Klemmriegel (19) mit der Aussparung (22) übereinstimmt und die Gelenkversteifung (15) freigibt, und dass die Gelenkversteifung (15) mit dem Stellglied im Wesentlichen quer zur Schwenkachse mit dem anderen Holm (12) verspannbar ist.

2. Schwenkbarer Überrollbügel (11) mit zwei Vertikalträgern, die jeweils ein Paar Holme aufweisen, wobei jeweils der eine Holm (13) über eine Gelenkverbindung mit dem anderen Holm (12) schwenkbar verbunden ist in der Weise, dass die Gelenkverbindung ein Scharnier (16) aufweist, wobei ein beweglicher Teil des Scharniers (16) die Gelenkversteifung (15) an dem einen Holm (13) ist und ein anderer Teil des Scharniers (16) ein Scharnierlager ist, welches am anderen Holm (12) befestigt ist, und die Gelenkverbindung ferner eine Arretierung (17) und einen Anschlag aufweist, wobei der Anschlag aus einer Gelenkversteifung (15) besteht, die aus einer Verlängerung des einen Holmes (13) besteht und ein Ende des anderen Holmes (12) teilweise umgreift; und das die Arretierung (17) ein stufenlos verstellbares Stellglied aufweist, mit welchem die Gelenkversteifung (15) gegen den anderen Holm (12) verspannbar ist,
**dadurch gekennzeichnet,**
**dass** die Arretierung (17) einen über ein Scharnier mit dem anderen Holm (12) verbundenen schwenkbaren Bügel aufweist, an dem das stufenlos verstellbare Stellglied angebracht ist, wobei der Bügel sowohl über einen Teil der Gelenkversteifung (15) schwenkbar ist, als auch in eine Position geschwenkt werden kann, in der er die Gelenkversteifung freigibt, und dass die Gelenkversteifung (15) mit dem Stellglied im Wesentlichen quer zur Schwenkachse mit dem anderen Holm (12) verspannbar ist.

3. Schwenkbarer Überrollbügel gemäß einem der vorhergehenden Ansprüche,
**dadurch gekennzeichnet,**
**dass** das Stellglied eine Spannschraube ist.

4. Schwenkbarer Überrollbügel gemäß Anspruch 3,
**dadurch gekennzeichnet,**
**dass** die Spannschraube als Knebelschraube (18) ausgebildet ist.

5. Schwenkbarer Überrollbügel gemäß Anspruch 3,
**dadurch gekennzeichnet,**
**dass** die Spannschraube als Augenschraube (23) ausgebildet ist.

6. Schwenkbarer Überrollbügel (11) gemäß Anspruch 1 und 2,
**dadurch gekennzeichnet,**
**dass** das Stellglied ein Exzenterspanner (27) ist.

7. Schwenkbarer Überrollbügel (11) mit zwei Vertikalträgern, die jeweils ein Paar Holme aufweisen, wobei jeweils der eine Holm (13) über eine Gelenkverbindung mit dem anderen Holm (12) schwenkbar verbunden ist in der Weise, dass die Gelenkverbindung ein Scharnier (16) aufweist, wobei ein beweglicher Teil des Scharniers (16) die Gelenkversteifung (15) an dem einen Holm (13) ist und ein anderer Teil des Scharniers (16) ein Scharnierlager ist, welches am anderen Holm (12) befestigt ist, und die Gelenkverbindung ferner eine Arretierung (17) und einen Anschlag aufweist, wobei der Anschlag aus einer Gelenkversteifung (15) besteht, die aus einer Verlängerung des einen Holmes (13) besteht und ein Ende des anderen Holmes (12) teilweise umgreift; und das die Arretierung (17) ein stufenlos verstellbares Stellglied aufweist, mit welchem die Gelenkversteifung (15) gegen den anderen Holm (12) verspannbar ist,
**dadurch gekennzeichnet,**
**dass** die Arretierung einen in etwa mittig über eine Bolzenverbindung (26) mit dem anderen Holm (12) verbundenen zweiarmigen Schwenkriegel (24) aufweist, wobei an dem einen Arm des Schwenkriegels (24) das Stellglied der Arretierung (17) angeordnet ist und der andere Arm des Schwenkriegels (24) über die Gelenkversteifung (15) hinweggeschwenkt werden kann, wobei der andere Arm ohne Stellglied im Falle des Verriegelns gegen die Gelenkversteifung (15) drückt und dass die Gelenkversteifung (15) mit dem Stellglied im Wesentlichen quer zur Schwenkachse mit dem anderen Holm (12) verspannbar ist.

8. Schwenkbarer Überrollbügel gemäß Anspruch 7,
**dadurch gekennzeichnet,**
**dass** das Stellglied eine Spannschraube oder ein Rastbolzen ist.

9. Schwenkbarer Überrollbügel gemäß Anspruch 7,
**dadurch gekennzeichnet,**
**dass** das Stellglied eine Griffspannschraube (25) ist.

10. Schwenkbarer Überrollbügel (11) gemäß einem der vorhergehenden Ansprüche,
**dadurch gekennzeichnet,**
**dass** die Gelenkversteifung (15) aus einer U-förmigen Aufnahme besteht.

11. Schwenkbarer Überrollbügel (11) gemäß einem der vorhergehenden Ansprüche,
**dadurch gekennzeichnet,**
**dass** die U-förmige Aufnahme (15) an dem einen Holm (13) ortsfest angebracht ist.

12. Schwenkbarer Überrollbügel (11) gemäß einem der vorhergehenden Ansprüche,
**dadurch gekennzeichnet,**
**dass** die Gelenkversteifung (15) drei Seiten des anderen Holmes (12) umgreift.

13. Schwenkbarer Überrollbügel (11) gemäß einem der vorhergehenden Ansprüche,
**dadurch gekennzeichnet,**
**dass** die Gelenkverbindung elastisch gelagert ist, wobei das elastische Lager (31) so angeordnet ist, dass es beim verspannen der Gelenkversteifung (15) gegen den anderen Holm (12) zusammengedrückt wird.

14. Schwenkbarer Überrollbügel (11) gemäß einem der vorhergehenden Ansprüche,
**dadurch gekennzeichnet,**
**dass** das obere Segment (13) des Überrollbügel (11) über den Scheitelpunkt hinweg schwenkbar ist.

## Claims

1. A swivelable roll bar (11), comprising two vertical carriers which each comprise a pair of spars, with the respective one spar (13) being connected swivelably through a link joint with the other spar (12) in such a way that the link joint comprises a hinge (16), with a movable part of the hinge (16) being the joint stiffener (15) on one spar (13) and another part of the hinge (16) being a hinge bearing which is fastened to the other spar (12), and the link joint further comprising a lock (17) and a stop, with the stop consisting of a joint stiffener (15) which consists of an extension of the one spar (13) and partly grips an end of the other spar (12), and that the lock (17) comprises a continuously adjustable actuating element with which the joint stiffener (15) can be braced against the other spar (12),
**characterized in that**
the lock (17) comprises a clamping bolt (19) which is connected with the other spar (12) via the actuating element, the joint stiffener (15) comprises a recess (22) which is arranged in such a way that the clamping bolt (19), when locked, can be swiveled over the surface of the joint stiffener (15) of the recess (22) and connects the joint stiffener (15) by means of the actuating element in a play-free manner with the other spar (12) and, in the case of unlocking, can be brought by rotation to a position in which the clamping bolt (19) coincides with the recess (22) and releases the joint stiffener (15), and that the joint stiffener (15) is braced with the actuating element substantially transversally to the swiveling axis with the other spar (12).

2. A swivelable roll bar (11), comprising two vertical carriers which each comprise a pair of spars, with the respective one spar (13) being connected swivelably through a link joint with the other spar (12) in such a way that the link joint comprises a hinge (16), with a movable part of the hinge (16) being the joint stiffener (15) on one spar (13) and another part of the hinge (16) being a hinge bearing which is fastened to the other spar (12), and the link joint further comprising a lock (17) and a stop, with the stop consisting of a joint stiffener (15) which consists of an extension of the one spar (13) and partly grips an end of the other spar (12), and that the lock (17) comprises a continuously adjustable actuating element with which the joint stiffener (15) can be braced against the other spar (12),
**characterized in that**
the lock (17) comprises a swivelable bracket which is connected via a hinge with the other spar (12) and to which continuously adjustable actuating element is connected, with the bracket being swivelable both over a part of the joint stiffener (15) and can also be swiveled to a position in which it releases the joint stiffener, and that the joint stiffener (15) can be braced with the actuating element substantially transversally to the swiveling axis with the other spar (12).

3. A swivelable roll bar according to one of the preceding claims,
**characterized in that**
the actuating element is a clamping screw.

4. A swivelable roll bar according to claim 3,
**characterized in that**
the clamping screw is arranged as a tommy screw (18).

5. A swivelable roll bar according to claim 3,
**characterized in that**
the clamping screw is arranged as an eye-bolt (23).

6. A swivelable roll bar (11) according to claim 1 and 2,
**characterized in that**
the actuating element is an eccentric clamp (27).

7. A swivelable roll bar (11), comprising two vertical carriers which each comprise a pair of spars, with the respective one spar (13) being connected swivelably through a link joint with the other spar (12) in such a way that the link joint comprises a hinge (16), with a movable part of the hinge (16) being the joint stiffener (15) on one spar (13) and another part of the hinge (16) being a hinge bearing which is fastened to the other spar (12), and the link joint further comprising a lock (17) and a stop, with the stop consisting of a joint stiffener (15) which consists of an extension of the one spar (13) and partly grips an end of the other spar (12), and that the lock (17) comprises a continuously adjustable actuating element with which the joint stiffener (15) can be braced against the other spar (12),
**characterized in that**
the lock comprises a two-arm swivel bar (24) which is connected approximately centrally via a bolt connection (26) with the other spar (12), with the actuating member of the lock (17) being arranged on the one arm of the swivel bar (24) and the other arm of the swivel bar (24) can be swiveled beyond the joint stiffener (15), with the other arm without actuating element pressing against the joint stiffener (15) in the case of locking, and that the joint stiffener (15) can be braced with the actuating element substantially transversally to the swiveling axis with the other spar (12).

8. A swivelable roll bar according to claim 7,
**characterized in that**
the actuating element is a clamping screw or a detent pin.

9. A swivelable roll bar according to claim 7,
**characterized in that**
the actuating element is a grip clamping screw (25).

10. A swivelable roll bar (11) according to one of the preceding claims,
**characterized in that**
the joint stiffener (15) consists of a U-shaped receptacle.

11. A swivelable roll bar (11) according to one of the preceding claims,
**characterized in that**
the U-shaped receptacle (15) is attached to the one spar (13) in a stationary manner.

12. A swivelable roll bar (11) according to one of the preceding claims,
**characterized in that**
the joint stiffener (15) grips three sides of the other spar (12).

13. A swivelable roll bar (11) according to one of the preceding claims,
**characterized in that**
the link joint is held elastically, with the elastic bearing (31) being arranged in such a way that on bracing the joint stiffener (15) is pressed against the other spar (12).

14. A swivelable roll bar (11) according to one of the preceding claims,
**characterized in that**
the upper segment (13) of the roll bar (11) can be swiveled beyond the apex.

## Revendications

1. Arceau de sécurité pouvant pivoter (11) avec deux supports verticaux, lesdits supports présentant chacun une paire de montants, et chacun des montants (13) étant relié à l'autre montant (12) par un assemblage articulé de manière à pouvoir pivoter de par le fait que et l'assemblage articulé présentant une charnière (16), la partie mobile de la charnière (16) étant le raidissement de l'articulation (15) au premier des montants (13) et qu'une autre partie de la charnière (16) est une palier de charnière, lequel est fixé à l'autre montant (12) et que l'assemblage articulé présente de plus un dispositif d'arrêt (17) et un taquet, le taquet est constitué par un raidissement (15), constitué par un prolongement du montant correspondant (13) et entoure en partie l'extrémité de l'autre montant (12); et que le dispositif d'arrêt (17) présente un organe de réglage pouvant être réglé en continu, par lequel die le raidissement de l'articulation (15) peut être haubané contre l'autre montant (12),
**caractérisé en ce que**,
le dispositif d'arrêt (17) présente un verrou de blocage (19) qui est relié à l'autre montant (12) par l'organe de réglage, que le raidissement de l'articulation (15) présente une épargne (22), constituée de manière à ce que le verrou de blocage (19) dans le cas d'un verrouillage puisse pivoter pardessus la surface du raidissement de l'articulation (15) de l'épargne (22) et relie sans laisser de jeu le raidissement de l'articulation (15) au moyen de l'organe de réglage avec l'autre montant (12) et dans le cas d'un déverrouillage peut être mis par rotation dans la position dans laquelle le verrou de blocage (19) correspond à l'épargne (22) et libère le raidissement de l'articulation (15) et que le raidissement de l'articulation (15) peut être haubané avec l'autre montant (12) en gros transversalement à l'axe de rotation.

2. Arceau de sécurité pouvant pivoter (11) avec deux supports verticaux, lesdits supports présentant chacun une paire de montants, et chacun des montants (13) étant relié à l'autre montant (12) par un assemblage articulé de manière à pouvoir pivoter de par le fait que et l'assemblage articulé présentant une charnière (16), la partie mobile de la charnière (16) étant le raidissement de l'articulation (15) au premier des montants (13) et qu'une autre partie de la charnière (16) est une palier de charnière, lequel est fixé à l'autre montant (12) et que l'assemblage articulé présente de plus un dispositif d'arrêt (17) et un taquet, le taquet est constitué par un raidissement (15), constitué par un prolongement du montant correspondant (13) et entoure en partie l'extrémité de l'autre montant (12); et que le dispositif d'arrêt (17) présente un organe de réglage pouvant être réglé en continu, par lequel die le raidissement de l'articulation (15) peut être haubané contre l'autre montant (12),
**caractérisé en ce que**,
le dispositif d'arrêt (17) présente un arc pivotant reliée à l'autre montant (12) par une charnière à laquelle un organe de réglage pouvant être réglé en continu est fixée, l'arc pouvant aussi bien pivoter pardessus une partie du raidissement de l'articulation (15) que être pivoté dans une position dans laquelle il libère le raidissement de l'articulation et que le raidissement de l'articulation (15) peut être haubané avec l'autre montant (12) en gros transversalement à l'axe de rotation.

3. Arceau de sécurité pouvant pivoter selon une des revendications précédentes,
**caractérisé en ce que**,
le dispositif de réglage est une vis de tension

4. Arceau de sécurité pouvant pivoter selon la revendication 3,
**caractérisé en ce que**,
la vis de tension est constituée comme vis à croisillon (18)

5. Arceau de sécurité pouvant pivoter selon la revendication 3,
**caractérisé en ce que**,
la vis de tension est constituée comme anneau à vis (23).

6. Arceau de sécurité pouvant pivoter (11) selon les revendications 1 et 2,
**caractérisé en ce que**,
le dispositif de réglage est un tendeur excentrique (27).

7. Arceau de sécurité pouvant pivoter (11) avec deux supports verticaux, lesdits supports présentant chacun une paire de montants, et chacun des montants (13) étant relié à l'autre montant (12) par un assemblage articulé de manière à pouvoir pivoter de par le fait que et l'assemblage articulé présentant une charnière (16), la partie mobile de la charnière (16) étant le raidissement de l'articulation (15) au premier des montants (13) et qu'une autre partie de la charnière (16) est une palier de charnière, lequel est fixé à l'autre montant (12) et que l'assemblage articulé présente de plus un dispositif d'arrêt (17) et un taquet, le taquet est constitué par un raidissement (15), constitué par un prolongement du montant correspondant (13) et entoure en partie l'extrémité de l'autre montant (12); et que le dispositif d'arrêt (17) présente un organe de réglage pouvant être réglé en continu, par lequel die le raidissement de l'articulation (15) peut être haubané contre l'autre montant (12),
**caractérisé en ce que**,
le dispositif d'arrêt (17) présente un verrou pivotant (24) relié environ au milieu au-dessus de l'assemblage boulonné (26) avec l'autre montant (12), l'organe de réglage du dispositif d'arrêt (17) étant disposé à l'un des bras du verrou pivotant (24) et l'autre bras du verrou pivotant (24) pouvant pivoter pardessus le raidissement de l'articulation (15) le bras sans organe de réglage en cas de verrouillage appuyant contre le raidissement de l'articulation (15) et que le raidissement de l'articulation (15) avec l'organe de réglage peut être haubané avec l'autre montant (12) en gros transversalement à l'axe de rotation.

8. Arceau de sécurité pouvant pivoter selon la revendication 7,
**caractérisé en ce que**
l'organe de réglage est une vis de tension ou un boulon d'arrêt.

9. Arceau de sécurité pouvant pivoter selon la revendication 7,
**caractérisé en ce que**
l'organe de réglage est une vis de tension à poignée (25).

10. Arceau de sécurité (11) pouvant pivoter selon lune des revendications précédentes
**caractérisé en ce que**
le raidissement de l'articulation (15) est constitué par une réception en forme de U.

11. Arceau de sécurité (11) pouvant pivoter selon lune des revendications précédentes
**caractérisé en ce que**
la réception en forme de U (15) est montée de manière fixe au montant (13).

12. Arceau de sécurité (11) pouvant pivoter selon lune des revendications précédentes
**caractérisé en ce que**
le raidissement de l'articulation (15) enserre trois côtés de l'autre montant (12).

13. Arceau de sécurité (11) pouvant pivoter selon l'une des revendications précédentes
**caractérisé en ce que**
le raidissement de l'articulation est suspendu de manière élastique, le palier élastique (31) étant disposé de manière à ce que lorsqu'on tend le raidissement de l'articulation (15) il est écrasé contre l'autre montant (12).

14. Arceau de sécurité (11) pouvant pivoter selon lune des revendications précédentes
**caractérisé en ce que**
le segment supérieur (13) de l'arceau de sécurité (11) peut pivoter par delà le point culminant.
